# EUROPEAN PATENT SPECIFICATION

(11) **EP 1 939 684 B1**
(45) Date of publication and mention of the grant of the patent: **13.02.2013**
(21) Application number: 07024157.5
(22) Date of filing: 12.12.2007
(51) Int. Cl.: H04N 1/00, G03B 17/20, G01C 21/00, H04N 5/77, G03B 29/00

(54) **Portable device with camera and position measurement system**
Tragbare Vorrichtung mit Kamera und Positionsbestimmungssystem
Dispositif portable avec appareil photo et dispositif de détection de position

(30) Priority: 26.12.2006 JP 2006349056
(43) Date of publication of application: 02.07.2008
(73) Proprietor: Funai Electric Co., Ltd., Daito-shi, Osaka 574-0031 (JP)
(72) Inventor: Tanino, Ken, Daito-shi Osaka 574-0013 (JP)
(74) Representative: Grünecker, Kinkeldey, Stockmair & Schwanhäusser

(56) References cited:
- JP-A- 2002 094 870
- US-A1- 2003 068 974
- US-A1- 2006 010 699
- US-B1- 6 282 362
- US-B1- 6 657 666

## Description

### BACKGROUND OF THE INVENTION

The present invention relates to a portable device which is capable of being carried by a user, and more particularly relates to such a portable device comprising a display unit which displays an image of the subject which is being photographed upon a screen.

Portable devices which can be carried by the user, such as for example portable telephones equipped with cameras, are per se known from the prior art. Such a portable telephone equipped with a camera is provided with a display unit which displays upon a screen the image which is being photographed.

The user points a lens of the camera in the direction along which a building or a mountain or the like is located, and thereby composes an image of the object upon the screen of the display unit. By doing this, for example, a mountain which is being photographed is displayed upon the screen as a through image. Thereafter, the user performs photography or the like of this object.

It should be understood that a photographic device is proposed In Japanese Laid-Open Patent Publication 2002-94870 and US 6 282 362 B1.

However, with prior art type portable devices, no title for the photographic subject which is being photographed is displayed upon the screen of the display unit. Due to this, by misunderstanding, sometimes the user may undesirably compose upon the screen an image of an object which is different from the object which he desires to photograph. For example, even though the user wishes to photograph the mountain Mauna Kea, by misunderstanding he sometimes may compose an image of an adjacent but different mountain upon the screen, and this is undesirable.

As a result, with a portable device according to the prior art, sometimes the user has made a mistake and photographed the wrong photographic subject.

Accordingly, the objective of the present invention is to provide a portable device which notifies the user of a title of an object which is being displayed upon the screen, and thereby prevents the user from mistakenly photographing the wrong photographic subject.

Another prior art device is known from US 6 657 666 B1.

### SUMMARY OF THE INVENTION

The portable device according to the present invention is defined in claim 1. Useful modifications are set out in claims 2 to 5. The device includes a photographic means which photographs an image with a lens, and a first display means which displays an image photographed by the photographic means upon a first screen. With this structure, the user points the lens in the direction of some object, and frames this object upon the screen of the first display means. The object may be, for example, a building or a mountain. Furthermore, this portable device may be, for example, an image capturing device or a portable telephone equipped with a camera.

Moreover, this portable device includes a storage means which stores map information in advance. This map information is information which includes a map of a region in which the portable device is used, and titles of a plurality of objects which are present upon the map.

Furthermore, this portable device includes a position measurement means which measures the position of the portable device, and an azimuth detection means which detects the azimuth in which the lens is pointing.

Yet further, this portable device includes a second display means which displays a map of the region around the position of the portable device upon a second screen, based upon the position which has been measured by the position measurement means, the azimuth which has been detected by the azimuth detection means, and the map information.

And, based upon the map information, the second display means displays upon the second screen a title of at least one object which is present upon the map of the region around the portable device which is being displayed upon the second screen, in correspondence with the at least one object. Due to this, along with displaying that at least one object upon the screen of the first display means, a map of the region around the position of the portable device and the title of that at least one object are also displayed upon the screen of the second display means.

### BRIEF DESCRIPTION OF THE DRAWINGS

Fig. 1 is a block diagram showing the main structure of a portable device according to an embodiment of the present invention;
Fig. 2 is a perspective view showing the external appearance of this portable device according to an embodiment of the present invention;
Fig. 3 is a rear view of this portable device according to an embodiment of the present invention;
Fig. 4 is a flow chart showing a sequence of operations performed by a control unit of this portable device according to an embodiment of the present invention;
Fig. 5 is a figure showing an example of an image which is being displayed upon a display unit 7, and an example of a map which is being displayed upon a display unit 9;
Fig. 6 is a figure showing another example of an image which is being displayed upon the display unit 7, and another example of a map which is being displayed upon the display unit 9;
Fig. 7 is a figure showing yet another example of an image which is being displayed upon the display unit 7, and yet another example of a map which is being displayed upon the display unit 9; and
Fig. 8 is a figure showing still another example of an image which is being displayed upon the display unit 7, and still another example of a map which is being displayed upon the display unit 9.

### DETAILED DESCRIPTION OF THE INVENTION

In the following, embodiments of the portable device according to the present invention will be explained.

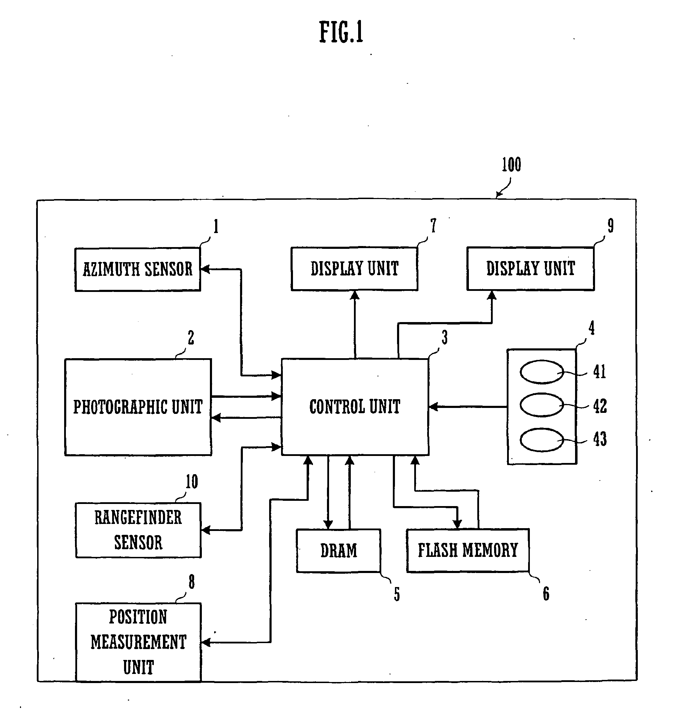

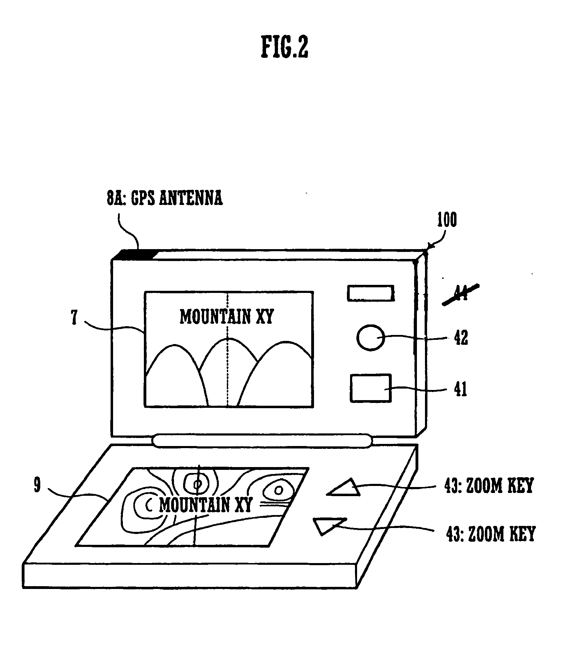

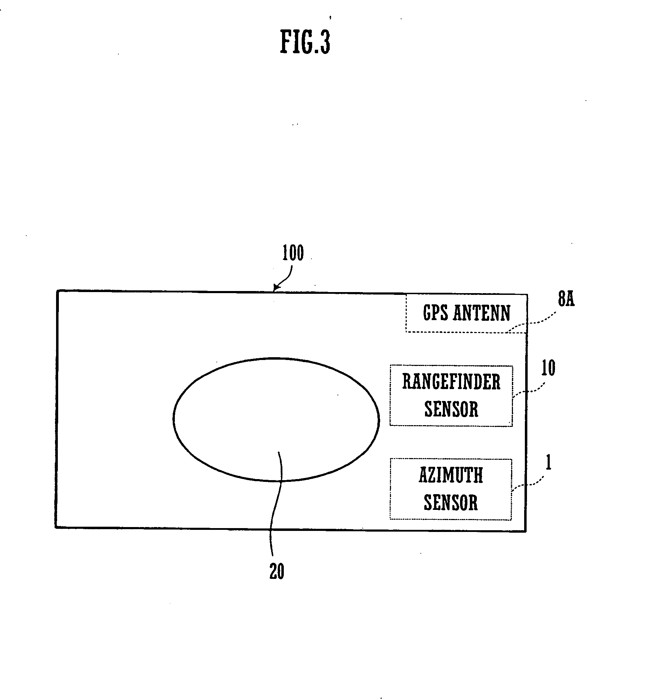

Fig. 1 is a block diagram showing the main structure of a portable device according to an embodiment of the present invention. And Fig. 2 is a perspective view showing the external appearance of this portable device according to an embodiment of the present invention. Moreover, Fig. 3 is a rear view of this portable device according to an embodiment of the present invention

As shown in Fig. 1, this portable device 100 comprises: an azimuth sensor 1 which detects the azimuth of the portable device 100; a photographic unit 2 which captures an image of a photographic subject and an image of the vicinity thereof; a control unit 3 which controls the operation of the various sections of this portable device 100; an actuation unit 4 which receives actuation input from the user; a DRAM 5 which temporarily stores image data corresponding to the image of the photographic subject which has been captured; a flash memory 6 which stores this image data; a display unit 7 which displays an image of the photographic subject upon a screen; a position measurement unit 8 which measures the position of the portable device 100; a display unit 9 which displays a map image based upon map information; and a rangefinder sensor 10 which measures the distance from the position of this portable device 100 to the photographic subject.

Here, the flash memory 6 corresponds to the "storage means" of the Claims. Furthermore, the display unit 7 corresponds to the "first display means" of the Claims. And the display unit 9 corresponds to the "second display means" of the Claims. Moreover, the rangefinder sensor 10 corresponds to the "distance measurement means" of the Claims.

The azimuth sensor 1 comprises an electronic azimuth measurement device which is equipped with a geomagnetism sensor. This geomagnetism sensor may be, for example, a MR element. And, based upon the geomagnetic field, this azimuth sensor 1 detects the azimuth in which a photographic lens 20 is pointed. Moreover, the azimuth sensor 1 sends to the control unit 3 azimuth information which specifies this azimuth in which the photographic lens 20 is pointed.

The photographic unit 2 comprises the photographic lens 20, a zoom unit which includes a zoom lens, a signal conversion unit which includes a CCD and a CCD drive unit, and a signal processing unit, not all of which are shown in the figures. And, based upon a command from the control unit 3, the photographic unit 2 shifts the zoom lens with a zoom unit (not shown in the figures). In other words, the photographic unit 2 performs zoom operation. Due to this, the focal point distance may be freely changed within a fixed range.

The control unit 3 comprises, for example, a CPU. Moreover, this control unit 3 comprises a ROM which stores a control program in which control procedures for the various sections of the portable device 100 are specified, and a RAM which serves as a working space for maintaining the data processed by this control program, neither of which is shown in the figures.

The control unit 3 performs overall control of the portable device 100 according to the above described control program. Furthermore, the control unit 3 controls the various sections of the portable device 100 in correspondence to commands from the actuation unit 4. For example, the control unit controls the zoom unit of the photographic unit 2 based upon a zoom amount commanded by actuation of a zoom key 43.

The actuation unit 4 is provided with a shutter key 41 for performing photography, the zoom key 43 which receives a command for a zoom amount, a power supply key 42 which toggles between power supply ON and power supply OFF upon actuation by the user, and various other keys. When these keys are actuated, commands corresponding to those actuations are sent to the control unit 3.

The DRAM 5 is used as a memory for working. This DRAM 5 may include, for example, a buffer region for temporarily storing an image which has been photographed or an image which has been replayed, a working region for performing data compression or expansion tasks, and the like.

The flash memory 6 stores images which have been photographed. Furthermore map information, which includes a map of the region in which this portable device 100 is used and titles corresponding to a plurality of objects which are present upon this map, is stored in the flash memory 6 in advance. This map is a map which includes, at least, the area surrounding the position of the portable device 100. Furthermore, this map specifies the respective positions of a plurality of objects. These objects may be, for example, mountains or buildings.

The display unit 7 comprises a video memory, a video encoder, and a liquid crystal display unit. The details of this video memory, video encoder, and liquid crystal display unit will be described hereinafter.

The position measurement unit 8 may comprise, for example, a GPS antenna 8A, an RFamplifier, an A/D converter, a data register, a counter, a decoder, and a microcomputer which controls these units. This position measurement unit 8 receives radio waves from the GPS satellites with the GPS antenna 8A. Next, the position measurement unit 8 amplifies and demodulates these received signals. And the position measurement unit 8 decrypts the satellite data which it has acquired by this demodulation. Moreover, the position measurement unit 8 measures the position of the portable device 100 from the data which it has thus decrypted. Finally, the position measurement unit 8 sends the position information which it has acquired by this measurement to the control unit 3.

The display unit 9 comprises a video memory, a video encoder, and a liquid crystal display unit. The video encoder converts image data which has been outputted from the control unit 3 to the video memory into a video signal, which it outputs to the liquid crystal display unit. This image data is data which specifies a map of the area surrounding the current position of the portable device 100, and the title of at least one object which is present upon this map. And the liquid crystal display unit displays this video signal which has thus been outputted upon a screen. Due to this, the display unit 9 displays a map of the area surrounding the current position of the portable device 100, based upon the map information (refer to Fig. 2). A map of the area surrounding the portable device 100 is being displayed upon the display unit 9 of Fig. 2. Furthermore, this display unit 9 is endowed with a function of displaying characters by superimposition, according to control by the control unit 3.

The rangefinder sensor 10 measures the distance from the portable device 100 to the photographic subject.

Now, the operation when displaying upon the screen the image of a subject which is being photographed by the user will be explained.

First, the photographic unit 2 captures an image with the photographic lens 20. This image is an image which includes an image of the photographic subject and an image of the vicinity of the photographic subject. Next, the photographic unit 2 inputs the image which it has thus captured to its signal conversion unit. The signal conversion unit converts the image which has thus been captured to an image signal with its CCD, and thus converts the image into digital data. Moreover, from this digital data, using its signal processing unit, the photographic unit 2 acquires a signal component (hereinafter termed the image data) which consists of a multiplexed signal including luminance, color difference, and the like (Y, Cb, and Cr data). And the photographic unit 2 transfers this image data to the DRAM 5 via the control unit 3. Furthermore, the image data which has thus been transferred to the DRAM 5 is also transferred via the control unit 3 to the video memory of the display unit 7. Here the term "through image" refers to an image which shows the image which can currently be seen through the photographic lens. Moreover, during this operation of through image display, the image data in the DRAM 5 is constantly being updated with the newest information available.

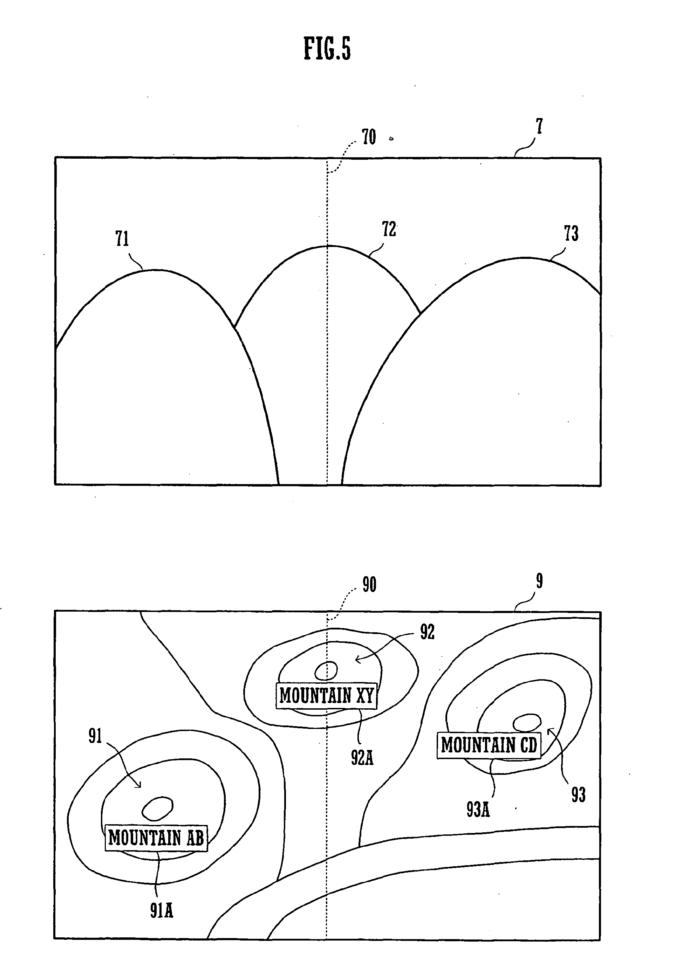

The video encoder of the display unit 7 converts the image data which has been transferred from the photographic unit 2 to the video memory into a video signal, which it outputs to its liquid crystal display unit. And the liquid crystal display unit displays this video signal which has thus been outputted upon its screen. By doing this, during photography, the display unit 7 displays a through image under the display control of the control unit 3 (refer to Fig. 2 and Fig. 5 which will be described hereinafter).

And, when the shutter key 41 is depressed, the control unit 3 compresses the image data which is currently stored in the DRAM 5 (for example by JPEG), and stores the result in the flash memory 6. By doing this, photography of the photographic subject is completed.

When, after this photography has been completed, replay of image data which is stored in the flash memory 6 is commanded by the actuation unit 4, the control unit 3 reads out from the flash memory 6 the image data which is to be the subject of replay. And the control unit 3 outputs this image data to the video memory of the display unit 7. The video encoder of the display unit 7 converts this image data which has been outputted from the control unit to the video memory into a video signal, which it then outputs to the liquid crystal display unit. And the liquid crystal display unit of the display unit 7 displays this video signal which has thus been outputted upon its screen. By doing this, the display unit 7 replays the image data in the flash memory 6, and displays a replay image upon its screen (refer to Fig. 2 and Fig. 5 which will be described hereinafter).

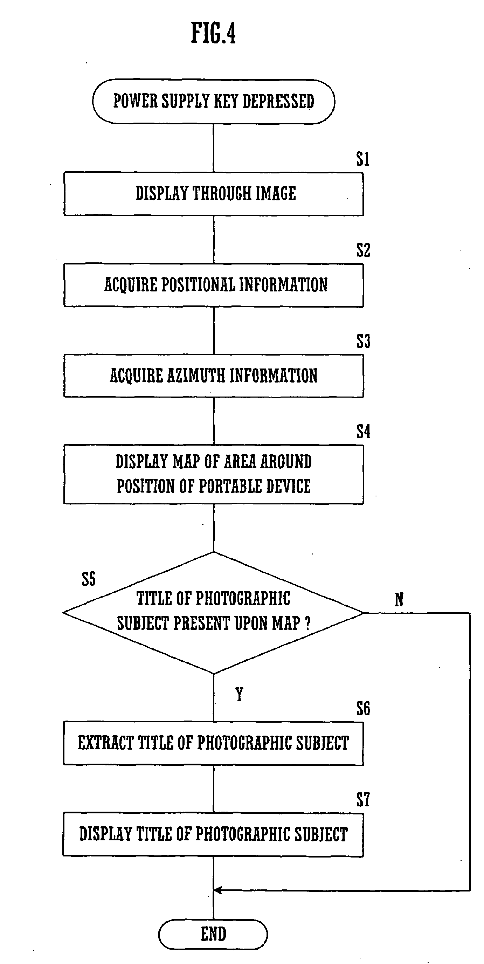

Fig. 4 is a flow chart showing a sequence of operations performed by a control unit of this portable device according to an embodiment of the present invention. This operation is the operation which is performed when the power supply to the portable device 100 is turned ON due to the power supply key 42 being depressed.

When the power supply key 42 is depressed, the control unit 3 displays a through image upon the display unit 7 (a step S1). Due to this, an image of the subject which is being photographed by the user is displayed as this through image upon the display unit 7. Here, in this embodiment, it is supposed that the user is directing the photographic lens 20 in the direction of a mountain, so that the desired mountain is framed upon the screen of this display unit 7.

Next, the control unit 3 commands the position measurement unit 8 to measure the position of the portable device 100, and thereby acquires position information which specifies the current position of the portable device 100 (a step S2).

And the control unit 3 commands the azimuth sensor 1 to detect the azimuth of the portable device 100, and thereby acquires azimuth information which specifies the current azimuth in which the photographic lens 20 is pointing (a step S3).

Then the control unit 3 reads out map information from the flash memory 6, based upon the current position which it has acquired in the step S2 and the azimuth which it has acquired in the step S3, and displays upon the display unit 9 a map of the area surrounding the current position of the portable device 100, as shown in Fig. 2 (a step S4). To describe this in more detail, based upon said current position and upon said azimuth, the control unit 3 outputs to the video memory of the display unit 9 image data which depicts a map of the area surrounding the current position of the portable device 100. Due to this, an image as shown in Fig. 2 is displayed upon the screen of the display unit 9.

It should be understood that, in an implementation, it would also be acceptable for the distance from the portable device 100 to the photographic subject, as measured by the rangefinder sensor 10, to be employed as an additional parameter. In other words, it would be acceptable for the control unit 3 to read out map information from the flash memory 6, and to display a map of the area surrounding the portable device 100 upon the display unit 9, based upon the distance from the portable device 100 to the photographic subject and also upon the current position and azimuth. By doing this, it would be possible to display a more appropriate map upon the display unit 9.

And the control unit 3 makes a decision as to whether or not a title for the photographic subject which is being displayed upon the display unit 7 is present upon the map which is being displayed upon the display unit 9 (a step S5). This decision is performed based upon the map information which has been read out from the flash memory 6.

If the decision in the step S5 is negative, then the control unit 3 terminates this processing.

On the other hand, if the decision in the step S5 is affirmative, then the control unit 3 extracts the title of the photographic subject which is being displayed upon the display unit 7 from the map information (a step S6).

It should be understood that it would also be acceptable for the control unit 3 to omit the processing of the step S6, if the title of the object is depicted in the image data deployed in the video memory of the display unit 9.

Furthermore, the control unit 7 commands the display unit 9 to display this title upon the map being displayed by the display unit 9 in correspondence with at least one object (a step S7). And the control unit 3 then terminates this processing. As a result, based upon the map information, the display unit 9 displays the title of at least one object which is present upon the map being displayed by the display unit 9, corresponding to that at least one object.

Fig. 5 is a figure showing an example of an image which is being displayed upon the display unit 7, and an example of a map which is simultaneously being displayed upon the display unit 9. In the step S6, as shown in Fig. 5, the control unit 3 displays titles 91A through 93A upon the map which is being displayed by the display unit 9, in correspondence with objects 91 through 93. Here, a center line 90 on the screen of the display unit 9 corresponds to a center line 70 on the screen of the display unit 7. Furthermore, a mountain 71 which is being displayed by the display unit 7 corresponds to an object 91 on the display unit 9. Moreover, a mountain 73 which is being displayed by the display unit 7 corresponds to an object 93 on the display unit 9. In Fig. 5, on the display unit 9, the characters 91A which spell out the title of the mountain 71 as being "Mountain AB" are displayed, the characters 92A which spell out the title of a mountain 72 as being "Mountain XY" are displayed, and the characters 93A which spell out the title of the mountain 73 as being "Mountain CD" are displayed.

In the state in which, in this manner, the mountains 71 through 73 are being displayed upon the display unit 7 and moreover their respective titles 71A through 73A are being displayed upon the display unit 9, the user may depress the shutter key 42 and perform photography or the like of the photographic subject.

Since, at this time, the titles 91A through 93A of the mountains 71 through 73 which are being displayed are notified to the user, accordingly, with this portable device 100, it is possible to prevent the user from making an undesirable mistake as to the photographic subject which he is photographing. In concrete terms, it is possible to prevent the occurrence of a case in which, although actually the user wants to take a picture of the mountain 72, due to a misunderstanding he centers the mountain 71 in the photographic field of view. Furthermore, the user is able to perform photography while comparing together the map and the scenery.

Furthermore, during hiking, if the user does not know the title of a photographic subject which is present in the area around the position of the portable device 100, then he may point the photographic lens 20 in the direction of that photographic subject, so that said photographic subject is framed upon the display unit 7. By doing this, along with that photographic subject being displayed as a through image upon the display unit 7, the title of said photographic subject and a map of the region around the portable device 100 are also displayed upon the display unit 9 (refer to Fig. 5). Accordingly, the user is able to know the title of that photographic subject, and to view a map of the region around the portable device 100.

It should be understood that although, in this embodiment, mountains 71 through 73 were used as the photographic subject, in an actual implementation, it is not necessary for the photographic subject to be limited to being a mountain. For example, the photographic subject may be a building or the like.

Furthermore, the following variant embodiments of the present invention may also be employed.

### - A FIRST VARIANT EMBODIMENT -

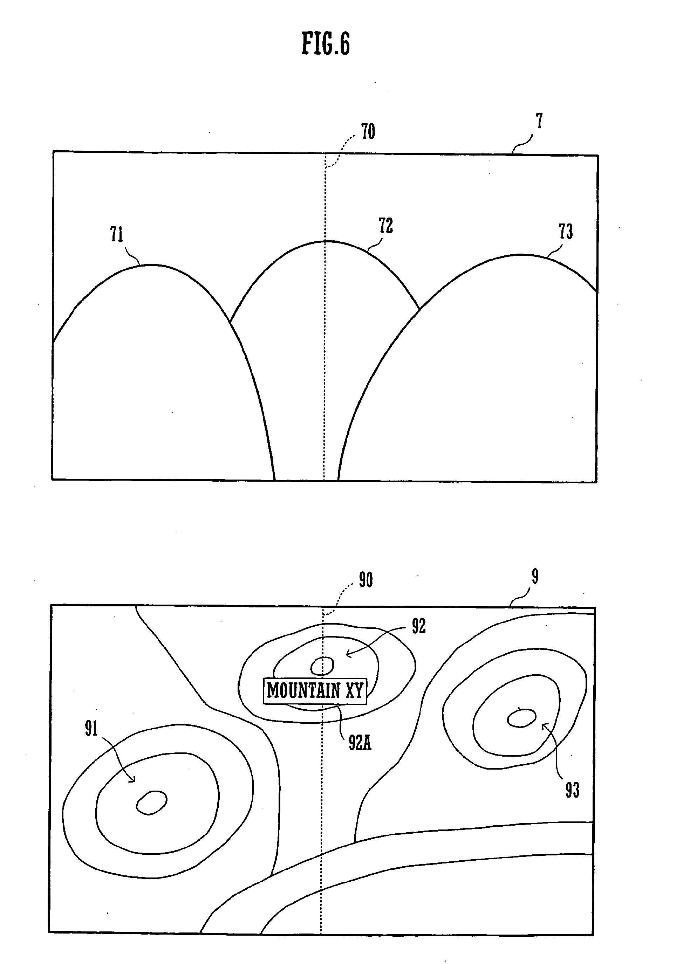

Fig. 6 is a figure showing another example of a through image which is being displayed upon the display unit 7, along with a map which is simultaneously being displayed upon the display unit 9. Normally, the user frames the subject which he desires to photograph in the center of the display unit 7. In this case, sometimes it may be considered that the titles of objects other than the desired photographic subject constitute an impediment to photographic composition.

Thus, in the step S6 of the Fig. 4 flow chart, the control unit 3 displays, upon the display unit 7, only the title of the photographic subject which is being displayed in the center of the screen. As shown in Fig. 6, the photographic subject which is being displayed in the center of the screen of the display unit 7 is the mountain 72 which is positioned upon the center line 70. In Fig. 6, only the characters 92A which specify the title "Mountain XY" of this mountain 72 are displayed.

According to the above, the user is able to be apprised only of the title of the desired photographic subject. To put it in another manner, it is possible to prevent unnecessary titles from being presented to the eyes of the user.

### - A SECOND VARIANT EMBODIMENT -

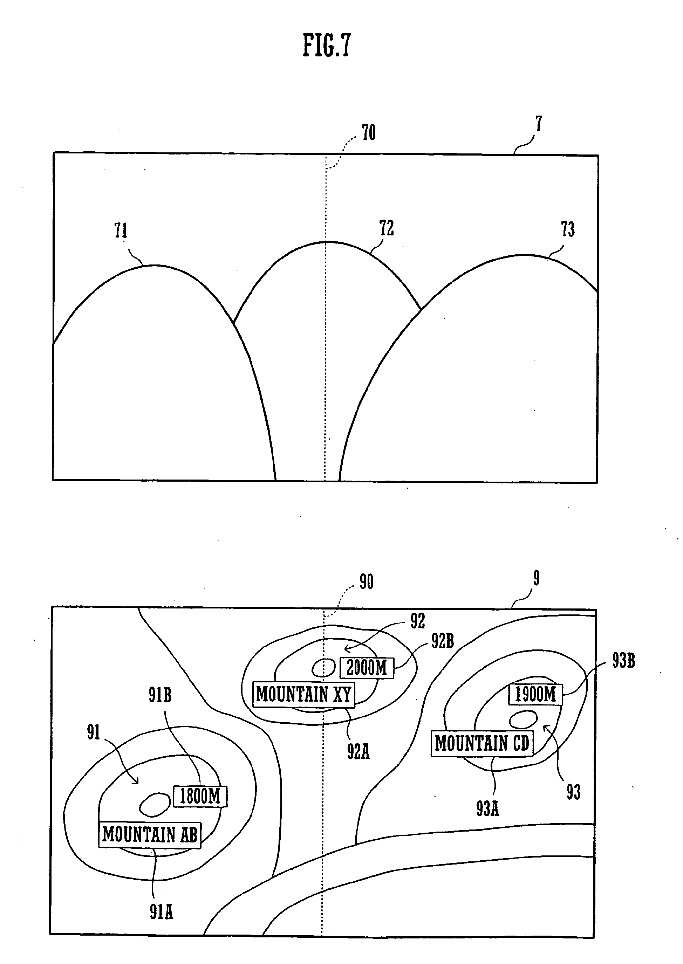

Fig. 7 is a figure showing yet another example of an image which is being displayed upon the display unit 7, along with a map which is simultaneously being displayed upon the display unit 9. It would also be acceptable to store map information including the altitudes of various mountains in the flash memory 6. And, in the steps S6 and S7 of the Fig. 4 flow chart, along with extracting the titles of the mountains from the map information, the control unit 3 also extracts the altitudes of these mountains, and displays them upon the display unit 9 (refer to Fig. 7). In Fig. 7, on the display unit 9, the characters 91B are displayed for specifying the altitude of the mountain 71, the characters 92B are displayed for specifying the altitude of the mountain 72, and the characters 93B are displayed for specifying the altitude of the mountain 73.

Furthermore, it would also be acceptable to provide a structure as will now be described. In concrete terms, the position measurement unit 8 receives the radio waves from four GPS satellites with the GPS antenna 8A. By doing this, when decryption of the satellite data which has been acquired is performed, the position measurement unit 8 is able to acquire the altitude of the photographic subject. And, in the step S2 of Fig. 4, the position measurement unit 8 transmits positional information including the altitude of the photographic subject to the control unit 3. Finally, in the step S7 of Fig. 4, along with the title of each mountain, the control unit 3 also displays the altitude of said mountain upon the display unit 7 (refer to Fig. 7).

If the system operates as above, then, along with framing the mountain which is the photographic subject and being apprised of its title, it is also possible for the user to be apprised of the altitude of that mountain.

It should be understood that it would also be acceptable to provide a structure in which, as shown in Fig. 6, only the title and the altitude of the photographic subject which is displayed in the center of the screen of the display unit 7 are displayed.

### - A THIRD VARIANT EMBODIMENT -

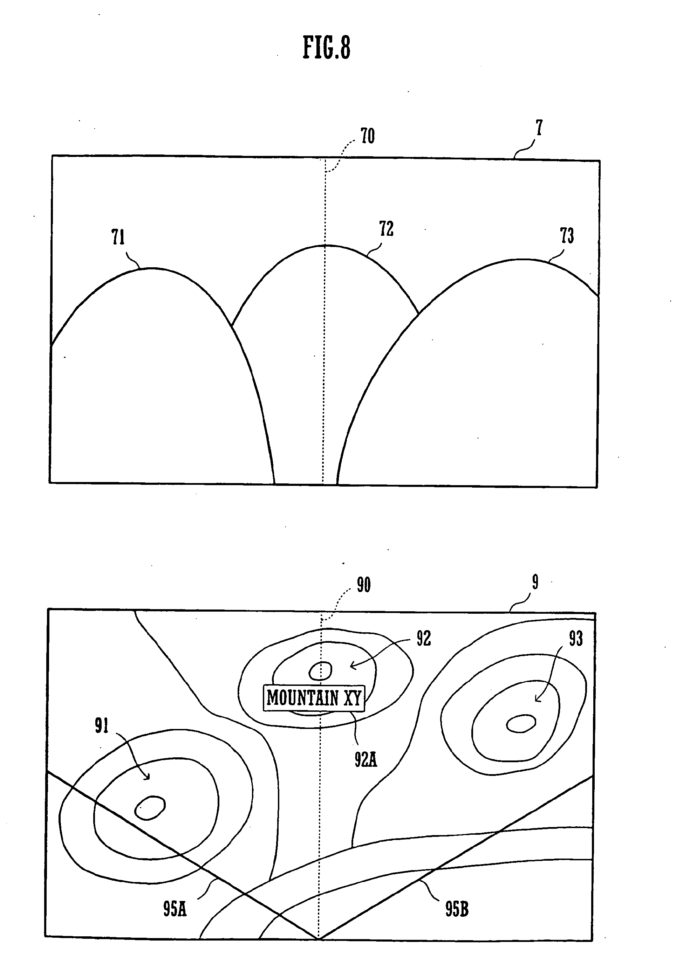

Fig. 8 is a figure showing still yet another example of an image which is being displayed upon the display unit 7, along with a map which is simultaneously being displayed upon the display unit 9. The map information which is stored in the flash memory 6 consists of a number of compressed figures, which are one basic view and a number of enlarged views. Moreover, the flash memory 6 stores this plurality of figures in correspondence with zoom amounts an commanded by the actuation of a zoom key 43. And, in the step S6 of Fig. 4, the control unit 3 may extract from the map information a map which corresponds to the zoom amount commanded by actuation of the zoom key 43, and may display this map upon the display unit 9. In other words, the control unit 3 magnifies or shrinks the map which is displayed upon the display unit 9, according to said zoom amount. In this case, as shown in Fig. 8, auxiliary lines 95A and 95B which show the range of photography may also be displayed upon the display unit 9.

Due to this, the user is able to perform photography while comparing a map which is yet further detailed with the scenery.

It should be understood that, as described above, the zoom unit of the photographic unit is controlled by the control unit 3 based upon a zoom amount which is designated by actuation of the zoom key 43.

## Claims

1. A portable device, comprising:
a photographic means (2) which photographs an image with a lens (20);
a first display means (7) which displays an image photographed by the photographic means (2) upon a first display screen;
a position measurement means (8) which measures a position of the portable device;
and
an azimuth detection means (1) which detects the azimuth in which the lens (20) is pointing;
**characterized by**
a storage means (6) which stores in advance map information including a map of a region in which the portable device is used, titles of a plurality of objects which are present upon the map, and height information which specifies the height of each of the plurality of objects;
a second display means (9) which displays a map of a region around the position of the portable device upon a second display screen, based upon the position which has been measured by the position measurement means (8), the azimuth which has been detected by the azimuth detection means (1), and the map information; and
a zoom key (43) which commands a zoom amount,
wherein, the map information consists of a few maps,
the storage means (6) stores the few maps in correspondence with the zoom amount commanded by the actuation of the zoom key (43)
based upon the map information, the second display means (9) displays upon the second display screen a title and height of at least one object which is present upon the map of the region around the portable device which is being displayed upon the second display screen, in correspondence with the at least one object, and
based upon the map information, the second display means (9) displays upon the second display screen a map which corresponds to the zoom amount commanded by the actuation of the zoom key (43).

2. The portable device according to claim 1, further **characterized by** comprising a distance measurement means (10) which measures a distance from the portable device to the at least one object which is being displayed by the first display means (7) upon the first display screen; and wherein the second display means (9) displays the map of the region around the position of the portable device upon the second display screen, based upon the distance which has been measured by the distance measurement means (10), the position which has been measured by the position measurement means (8), the azimuth which has been detected by the azimuth detection means (1), and the map information.

3. The portable device according to claim 1 or claim 2, further **characterized in that** the second display means (9) displays upon the second display screen a title and height for only a single object which is displayed near the center of the first display screen.

4. The portable device according to any one of claims 1 to 3, further **characterized in that** the object is a mountain or a building.

5. The portable device according to claim 1, further **characterized in that** the second display means (9) displays upon the second screen auxiliary lines which show a range photographed by the photographic means (2).

## Patentansprüche

1. Tragbares Gerät, das umfasst:
eine Fotografiereinrichtung (2), die ein Bild mit einem Objektiv (20) fotografiert;
eine erste Anzeigeeinrichtung (7), die ein mit der Fotografiereinrichtung (2) fotografiertes Bild auf einem ersten Anzeigebildschirm anzeigt;
eine Positionsmesseinrichtung (8), die eine Position des tragbaren Gerätes misst; und
eine Azimuth-Erfassungseinrichtung (1), die das Azimuth erfasst, in dessen Richtung das Objektiv (20) zeigt;
**gekennzeichnet durch**
eine Speichereinrichtung (6), die im Voraus Karten-Informationen speichert, die eine Karte eines Gebietes, in dem das tragbare Gerät verwendet wird, Namen einer Vielzahl von Objekten, die auf der Karte vorhanden sind, und Höheninformationen enthalten, die die Höhe jedes der Vielzahl von Objekten angeben;
eine zweite Anzeigeeinrichtung (9), die auf Basis der **durch** die Positions-Messeinrichtung (8) gemessenen Position, des **durch** die Azimuth-Erfassungseinrichtung (1) erfassten Azimuths und der Karten-Informationen eine Karte eines Gebietes um die Position des tragbaren Gerätes herum auf einem zweiten Anzeigebildschirm anzeigt; und
eine Zoom-Taste (43), die ein Zoom-Maß anweist,
wobei die Karten-Informationen aus einigen Karten bestehen,
die Speichereinrichtung (6) die Karten entsprechend dem **durch** die Betätigung der Zoom-Taste (43) angewiesenen Zoom-Maß speichert,
die zweite Anzeigeeinrichtung (9) auf Basis der Karten-Informationen auf dem zweiten Anzeige-Bildschirm einen Namen und eine Höhe wenigstens eines Objektes, das auf der auf dem zweiten Anzeigebildschirm angezeigten Karte des Gebietes um das tragbare Gerät herum vorhanden ist, entsprechend dem wenigstens einen Objekt anzeigt, und
die zweite Anzeigeeinrichtung (9) auf Basis der Karten-Informationen auf dem zweiten Anzeige-Bildschirm eine Karte anzeigt, die dem **durch** die Betätigung der Zoom-Taste (43) angewiesenen Zoom-Maß entspricht.

2. Tragbares Gerät nach Anspruch 1, des Weiteren **dadurch gekennzeichnet, dass** es eine Entfernungs-Messeinrichtung (10) umfasst, die eine Entfernung von dem tragbaren Gerät zu dem wenigstens einen Objekt misst, das durch die erste Anzeigeeinrichtung (7) auf dem ersten Anzeigebildschirm angezeigt wird, und wobei die zweite Anzeigeeinrichtung (9) auf Basis der durch die Entfernungs-Messeinrichtung (10) gemessenen Entfernung, der durch die Positions-Messeinrichtung gemessenen Position, des durch die Azimuth-Erfassungseinrichtung (1) erfassten Azimuths und der Karten-Informationen auf dem zweiten Anzeigebildschirm die Karte des Gebietes um die Position des tragbaren Gerätes herum anzeigt.

3. Tragbares Gerät nach Anspruch 1 oder Anspruch 2, des Weiteren **dadurch gekennzeichnet, dass** die zweite Anzeigeeinrichtung (9) auf dem zweiten Anzeigebildschirm einen Namen und eine Höhe nur für ein einzelnes Objekt anzeigt, das in der Nähe der Mitte des ersten Anzeigebildschirms angezeigt wird.

4. Tragbares Gerät nach einem der Ansprüche 1 bis 3, **dadurch gekennzeichnet, dass** das Objekt ein Berg oder ein Gebäude ist.

5. Tragbares Gerät nach Anspruch 1, des Weiteren **dadurch gekennzeichnet, dass** die zweite Anzeigeeinrichtung (9) auf dem zweiten Bildschirm Hilfslinien anzeigt, die einen mit der Fotografiereinrichtung (2) fotografierten Bereich zeigen.

## Revendications

1. Dispositif portable comprenant :
des moyens photographiques (2) qui photographient une image avec une lentille (20) ;
des premiers moyens d'affichage (7) qui affichent sur un premier écran d'affichage une image photographiée par les moyens photographiques (2) ;
des moyens de mesure de position (8) qui mesurent une position du dispositif portable ; et
des moyens de détection d'azimut qui détectent l'azimut dans lequel la lentille (20) est dirigée ;
**caractérisé par**
des moyens de stockage (6) qui stockent à l'avance des informations cartographiques contenant une carte d'une région dans laquelle le dispositif portable est utilisé, des titres de plusieurs objets qui sont présents sur la carte, des informations de hauteur qui indiquent la hauteur de chacun des objets ;
des seconds moyens d'affichage (9) qui affichent sur un second écran d'affichage une carte d'une région autour de la position du dispositif portable, sur la base de la position qui a été mesurée par les moyens de mesure de position (8), de l'azimut qui a été détecté par les moyens de détection d'azimut (1), et des informations cartographiques ; et
une touche de zoom (43) qui commande un degré de zoom,
étant précisé que les informations cartographiques se composent de quelques cartes,
que les moyens de stockage (6) stockent ces quelques cartes selon le degré de zoom commandé par l'actionnement de la touche de zoom (43),
que sur la base des informations cartographiques, les seconds moyens d'affichage (9) affichent sur le second écran d'affichage un titre et une hauteur d'au moins un objet présent sur la carte de la région autour du dispositif portable qui est affichée sur le second écran d'affichage, selon le ou les objets, et
que sur la base des informations cartographiques, les seconds moyens d'affichage (9) affichent sur le second écran d'affichage une carte qui correspond au degré de zoom commandé par l'actionnement de la touche de zoom (43).

2. Dispositif portable selon la revendication 1, également **caractérisé en ce qu'**il comprend des moyens de mesure de distance (10) qui mesurent une distance entre le dispositif portable et le ou les objets affichés par les premiers moyens d'affichage (7) sur le premier écran d'affichage ; et étant précisé que les seconds moyens d'affichage (9) affichent sur un second écran d'affichage la carte de la région autour de la position du dispositif portable, sur la base de la distance qui a été mesurée par les moyens de mesure de distance (10), de la position qui a été mesurée par les moyens de mesure de position (8), de l'azimut qui a été détecté par les moyens de détection d'azimut (1), et des informations cartographiques.

3. Dispositif portable selon la revendication 1 ou 2, également **caractérisé en ce que** les seconds moyens d'affichage (9) affichent sur le second écran d'affichage un titre et une hauteur pour un seul objet qui est affiché près du centre du premier écran d'affichage.

4. Dispositif portable selon l'une quelconque des revendications 1 à 3, également **caractérisé en ce que** l'objet est une montagne ou un bâtiment.

5. Dispositif portable selon la revendication 1, également **caractérisé en ce que** les seconds moyens d'affichage (9) affichent sur le second écran des lignes auxiliaires qui montrent une étendue photographiée par les moyens photographiques (2).
